# EUROPEAN PATENT SPECIFICATION

(11) **EP 0 996 583 B1**
(45) Date of publication and mention of the grant of the patent: **25.06.2003**
(21) Application number: 98934714.1
(22) Date of filing: 17.07.1998
(51) Int. Cl.: B66F 9/20

(54) **INTEGRATED CONTROL FOR ELECTRIC LIFT TRUCKS**
INTEGRIERTE STEUERUNG FÜR ELEKTRISCHE HUBWAGEN
COMMANDE INTEGREE POUR CHARIOT ELEVATEUR ELECTRIQUE

(30) Priority: 18.07.1997 CA 2210727
(43) Date of publication of application: 03.05.2000
(73) Proprietor: SRE Controls Inc., Waterloo, Ontario N2L 5R9 (CA)
(72) Inventor: ADSETT, Robert, T., Waterloo, Ontario N2J 1M4 (CA); GADBOIS, Pierre, C., Waterloo, Ontario N2K 2J4 (CA)
(74) Representative: Asquith, Anthony
(86) International application number: CA9800701
(87) International publication number: WO99003770

(56) References cited:
- EP-A- 0 664 273
- WO-A-95/18995
- DE-A- 2 343 297
- DE-U- 29 502 639
- GB-A- 1 385 099
- US-A- 2 564 002
- US-A- 4 102 132
- US-A- 4 755 100

## Description

### FIELD OF THE INVENTION

This invention relates generally to lift trucks that are powered by electric motors and, in particular, to a novel electronic control unit for controlling both an electric drive motor and an electric hydraulic pump motor for hydraulic functions of the electric lift truck.

### BACKGROUND OF THE INVENTION

In prior art regarding electric lift trucks, at least two controllers are used, one controller for the electric drive motor which may be a series wound motor or a separately excited motor, for example, and another controller for the hydraulic pump unit. The two controllers require double cabling and a duplication of processors and other components.

In prior art electric lift trucks, it is also common practice to run the hydraulic pump at or near full capacity at all times. Oil is pumped into a pressure tank and a pressure relief valve bleeds off excess fluid pressure into a reservoir where it is picked up by the pump and re-pressurized in a continuous cycle. As pressurized fluid is required for lift functions, it is exhausted from the pressure tank and bled back into the reservoir. While this arrangement works well, it is very energy in-efficient.

Another feature of prior art electric lift trucks is that hydraulically-assisted power steering in such trucks is provided with a separate power steering pump motor which uses a common reservoir with the lift motor but is otherwise a completely separate hydraulic circuit.

In most prior art lift trucks, lift functions are controlled by a bank of hydraulic valves which are manually operated to provide such lift functions as fork tilt, horizontal reach of the forks toward or away from a front of the truck, left or right side-shift of the fork rack, and raising or lowering of the forks. Thus at least four hydraulic valves may be provided for lift fork control. Each hydraulic valve is generally actuated by a manually operated lever.

In order to improve the control system of an electric lift truck, efforts have been made in respect of many of the features discussed above. U.S. Patent No. 5,481,875, entitled APPARATUS FOR CHANGING AND CONTROLLING VOLUME OF HYDRAULIC OIL IN HYDRAULIC EXCAVATOR, which issued to Takamura et al. on January 9, 1996 is an example. This patent discloses a hydraulic oil volume change-over control apparatus for a hydraulic excavator which subjects a hydraulic pump to load sensing control so as to provide an optimum volume of hydraulic oil while an engine for driving the hydraulic pump is operated at a rotational speed at which the fuel consumption of the engine is minimal, by setting a low power mode during breaker work or the like which is performed with a smaller volume of hydraulic oil than that needed during normal excavating work. The control apparatus comprises a variable displacement hydraulic pump, an engine for driving the hydraulic pump, an actuator driven by the hydraulic pump, an actuator control valve disposed in pipe lines between the hydraulic pump and the actuator, a load sensing control device for the hydraulic pump, and a controller for computing a control signal for operating the engine at a minimum fuel consumption rate under a predetermined power designated by the working mode changeover device, so as to deliver a control signal to the load sensing control device and a governor drive device for the engine. The controller can receive signals from a volume sensor for the hydraulic pump, an engine rotational speed sensor for the engine, a hydraulic pressure sensor for the actuator, and the load sensing control device.

Another example is U.S. Patent No. 4,449,365 entitled LIFT, TILT AND STEERING CONTROL FOR A LIFT TRUCK, which issued to Hancock on May 22, 1984. This patent discloses a lift truck hydraulic control system designed to conserve energy including a pair of separately controlled pumps 21, 22. One pump 21 supplies pressure fluid to a valve 12 for a steering cylinder 11 by way of a high priority port 34 of a priority valve 32 with a low priority flow to parallel connected lift and tilt valves 19, 18 which control operation of the lift cylinder 15 and tilt cylinders 16, 17, respectively. The capacity of pump 21 is sufficient to provide proper, effective operation of the steering and tilt functions but is not adequate to provide hydraulic fluid flow for high speed expansion of the lift cylinder 15. The other pump 22 is operated to supply additional pressure fluid flow for high speed lift only when the lift valve 19 is shifted to a raise position. In one embodiment, low speed lift is obtained by using the output of the first pump 21 and a high speed lift is obtained by selectively adding the output of the second pump 22. This is achieved by operating the second pump 22 only when the lift valve 19 is placed in an extreme raise position. In another embodiment, both pumps 21, 22 are operated "on demand", thereby further conserving energy.

Also directed to a control system for power steering, U.S. Patent No. 3,991,846, which issued on November 16, 1976 to Chichester et al. is entitled POWER STEERING SYSTEM and discloses a power steering system for electric vehicles. The system uses an electric drive motor for the supply pump of a power steering system controlled by a motor control which is in turn controlled by the steering demand of the operator. The motor and pump are operated only during steering operations and only at the power level required for any steering demand.

An example of improvements in vehicle control is taught in U.S. Patent No. 5,002,454, entitled INTUITIVE JOYSTICK CONTROL FOR A WORK IMPLEMENT, which issued to Hadank et al. on March 26, 1991. This patent discloses a joystick control system for a work mechanism of earthmoving or material handling vehicles which includes two multi-axis joysticks that provide the operator with an intuitive control interface to the vehicle in an effort to improve the manipulation of the mechanism with conventional control handles and pedals that do not intuitively correspond to the movement of the mechanism. The control system also provides a coordinated control system for spatial placement of the end effector of the work mechanism.

A further example of improvements in vehicle control is taught in International Application No. PCT/US94/14872 which was published on July 13, 1995 and entitled MULTIFUNCTION SINGLE LEVER CONTROL FOR LIFT TRUCKS. This published application teaches a single lever mechanical hand control (34) for multiple functions having two distinct axes of movement (46, 52). Movement of the lever (34) to the right, or to the left engages respective switches (62, 63) to drive a motor (74) in one direction or the other for either forward or reverse propulsion of the truck. Movement of the lever along the opposite axis operates valve spools of the lift/lower and the auxiliary control valves (59, 60) by linkage (57) which either pushes or pulls the spool overcoming the spring force of the valve spools. Because the valves pose the greatest resistance to force, the lever is oriented such that the direction of the largest control resistance is aligned with the larger muscle groups of an operator used in operating the lever (34). A pump (76) supplies hydraulic pressure for operating the reach, tilt, and side shift functions of the lift truck controlled by valve (60). A separate lift motor and pump (78, 79) supplies hydraulic fluid under pressure to a control valve (59) for operating the primary and secondary cylinders (80, 81, 82) employed in raising and lowering the rails (22, 23) and pantograph carriage (24).

A hydraulic control unit for an industrial fork lift truck is taught in GB-A-1385099 which was published on February 26, 1975. The document teaches a pump (15) driven by a motor (26) which is adapted to drive the pump at a number of predetermined speeds depending on the function to be operated. The speed of rotation of the pump motor (26) is detected by a speed sensor (27) which has a proximity sensing switch located on the motor so as to provide an output pulse to pulse control box (28) each time a metallic target mounted on the armature of the motor passes the sensor (27). The pulse control box (28) provides a feedback signal along line (29) to the thyristor pulse unit (30) so that the motor (26) runs at a selected fixed speed regardless of the load on the pump (15). Pulse control unit (28) is adapted to regulate the speed of the pump motor by means of speed setting potentiometers (31-34). Power steering potentiometer (31) is permanently coupled to the pulse control unit (28) since it provides for minimum pump motor speed if none of the actuators (12, 13, 14) are in use. The remaining potentiometers (32-34) are coupled in series with switches (35-37) which are closed only when appropriate hand levers (18, 19 and 20) for controlling hydraulic functions are operated.

The examples above illustrate the scope of effort that has been invested in this field. However, the prior art does not teach an integrated electronic controller for both traction and hydraulic function control of an electric lift truck. Furthermore, the prior art does not teach using a single joystick as the only interface to electronically control the propulsion of the truck as well as all hydraulic functions of the lift mechanism. Consequently, several significant problems are left un-addressed by the teachings of the prior art. First, modern lift trucks, especially electrically powered lift trucks, are designed to be compact and space for drive and control components is minimal. There therefore exists a need for a compact controller that can control both drive and hydraulic functions so that space required for electrical cabling and controller footprints are reduced. Secondly, energy conservation has become a significant issue. There therefore exists a need for a new hydraulic circuit and pump control that is capable supplying adequate pressurized fluid for all hydraulic functions, including power steering, with a single pump. Third, the prior art hydraulic systems designed to conserve energy shut down the hydraulic pump(s) when there was no demand for pressurized fluid. Consequently, the pump motors were subjected to frequent starts under load. This causes wear on the motor and shortens service life. There therefore exists a need for an efficient hydraulic pump control that minimizes wear and extends pump service life.

### SUMMARY OF THE INVENTION

It is therefore an object of the present invention to provide an integrated drive and hydraulic control system for an electric lift truck.

Another object of the invention is to provide a control system for an electric lift truck having two electric motors, one for truck propulsion and the other for a hydraulic pump, which system controls both of the motors and co-ordinates power distribution from a shared electric power supply.

Yet another object of the invention is to provide an energy efficient hydraulic system for an electric lift truck.

Yet another object of the invention is to provide a hydraulic system for an electric lift truck which requires only one pump motor to supply pressurized fluid for all hydraulic functions including power steering.

A further object of the invention is to provide an interface for an operator to control with one hand all functions of an electric lift truck except steering.

The invention therefore provides a control system for an electric lift truck which includes a drive motor (86) for truck propulsion and a pump motor (12) connected to a hydraulic pump (13) for supplying pressurized hydraulic fluid through a hydraulic circuit (10) to a hydraulic lift mechanism (90), the control system having an operator interface including a lever for an operator to control the propulsion of the electric lift truck and a plurality of functions of the hydraulic lift mechanism (90), the operator interface further including switches for controlling at least the direction of travel of the electric lift truck, characterized in that said control system further includes an electronic controller (80) connected to said operator interface (50) to provide an integrated drive and hydraulic control system for the electric lift truck, the electronic controller receiving from the operator interface (50) electronic control signals, and in response to said control signals the electronic controller controls a speed and a direction of revolution of a traction motor (86), a speed of revolution of a hydraulic pump motor (12), and incremental opening of control valves. (32, 34, 36, 44, 46).

The controller is preferably a pulse-width modulation controller and the first and second electric motors are DC or AC motors.

The hydraulic circuit of the control system may further comprise a power assisted steering system to which a hydraulic fluid is supplied with high priority from the pump.

Preferably, the control system further comprises an on-demand pressure switch that is connected to the hydraulic circuit between the hydraulic pump and the power assisted steering system so that the switch is triggered by a pressure rise in a supply of hydraulic fluid for the power assisted steering system. The on-demand pressure switch generates an electric signal to prompt the controller to change a speed of revolution of the second electric motor from a first speed to a second speed which is faster than the first speed.

The controller of the control system preferably executes an algorithm for measuring electric signals from the on-demand pressure switch and the interface respectively, and controls the speed of revolution of the second electric motor in response to the signals so that the hydraulic pump meets a demand of both of the power assisted steering system and the hydraulic lift mechanism.

If the electric lift truck is equipped with power steering, the controller also preferably controls the second electric motor to operate at an idle when no hydraulic fluid pressure is required for the hydraulic functions of the lift mechanism or the power assisted steering system.

The hydraulic circuit of the system may include a lift cylinder for lifting and lowering the lift mechanism; a tilt cylinder for tilting the lift mechanism; a reach cylinder for moving the lift mechanism toward and away from a front of the lift truck; a side-shift cylinder for moving the lift mechanism left and right with respect to the front of the lift truck; and a solenoid-valve block for selectively directing the pressurized fluid from the pump to a one of the lift, tilt, reach and side-shift cylinders.

The hydraulic circuit of the system preferably further comprises a proportional valve and a solenoid check valve connected in series between the lift cylinder and the tank, the solenoid check valve and proportional valve being controlled by the controller so that a lowering speed of the lift mechanism is controlled.

The interface which permits the operator to control the electric truck and hydraulic functions of the lift mechanism is preferably a joystick enabled to generate signals representative of movement simultaneously with respect to a first and a second axis. The signals representative of movement with respect to the first axis controls propulsion of the electric lift truck, i.e., both speed and direction of the first electric motor. The signals representative of movement with respect to the second axis controls movement of the lift mechanism, and also controls a speed of revolution of the second electric motor that drives the hydraulic pump.

Preferably, a direction of revolution of the first electric motor is changed when the joystick is tilted along the first axis and past a vertical orientation, and a direction of a movement of a lift mechanism is changed when the signals representing a movement with respect to the second axis indicate a change in direction.

The joystick preferably further comprises a plurality of buttons for controlling a plurality of functions of the hydraulic lift mechanism. The function of each button is mapped in the controller and the mapping is preferably a matter of choice.

In a preferred embodiment, the signals representing a movement with respect to the second axis when a lift lowering function is selected causes the electric controller to actuate a solenoid check valve and a proportional valve in a hydraulic circuit to control a speed at which the hydraulic lift mechanism is lowered when a lowering option is selected.

### BRIEF DESCRIPTION OF THE DRAWINGS

The invention will now be explained by way of example only and with reference to the accompanying drawings in which:
FIG. 1 is a schematic diagram of a control system according to a preferred embodiment of the present invention, in which a single controller is used for controlling both a traction motor and a hydraulic pump motor of an electric lift truck;
FIG. 2 is a schematic diagram of another embodiment of the present invention, in which two controllers are used, each controller controlling one of the motors shown in FIG. 1;
FIG. 3 is a schematic diagram of the hydraulic circuit used in the preferred embodiment of the present invention;
FIG. 4 is a side view of a joystick assembly of the present invention;
FIG. 5 is a schematic plan view of the joystick shown in FIG. 4, illustrating operational positions thereof;
FIG. 6 is a side view of another embodiment of a joystick assembly of the invention; and
FIG. 7 is a schematic plan view of a joystick shown in FIG. 6, illustrating operational positions thereof.

### DETAILED DESCRIPTION OF THE PREFERRED EMBODIMENT

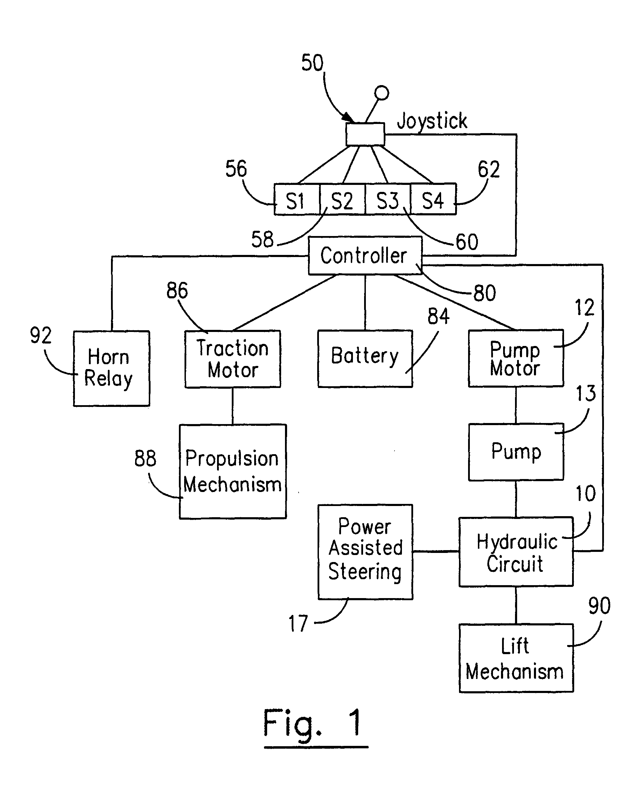

A control system for drive and hydraulic components of an electric lift truck is provided. The control system and the controlled lift truck components are illustrated in FIG. 1. This embodiment of the control system comprises a single controller 80 directly controlling a traction motor 86 which drives a propulsion mechanism 88 to move the electric lift truck forwards or backwards, and a pump motor 12 which is connected to an hydraulic pump 13. The controller 80 is a pulse width modulation (PWM) controller and the traction motor 86 and pump motor 12 are typically series wound DC or AC motors, although separately excited motors, permanent magnet motors or reluctance motors may also be used. A battery 84 supplies electric power to both the traction motor 86 and pump motor 12 through the controller 80 which modulates the width and interval of a pulsed DC or AC current and therefore controls the speed of the two motors, respectively. The direction of revolution of the traction motor 86 is also controlled by the controller 80. PWM controllers are well known in the art and are described for example in United States Patent Nos. 5,332,954 and 5,331,258 which respectively issued to the applicant on July 19, 1994 and July 26, 1994.

The pump 13 driven by the pump motor 12 is connected to la hydraulic circuit 10 through which the pump 13 supplies pressurized hydraulic fluid to a torque generator (not shown) that provides power assisted steering 17 for the lift truck. The pump also supplies pressurized hydraulic fluid to a lift mechanism 90 of the truck, such as a lift fork having functions of lifting, lowering, tilting, reaching and side-shift of the forks.

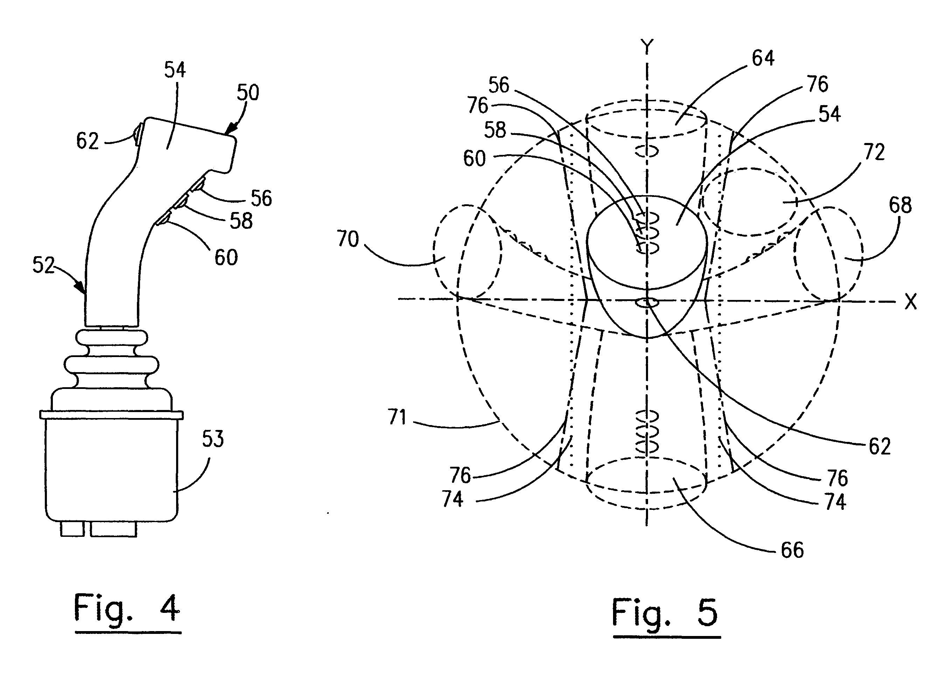

A joystick 50 provides an operator with an interface to the controller 80. A preferred embodiment of the joystick includes four switches 56, 58, 60 and 62 to permit selective control of the lift truck functions. One of the four switches triggers the controller 80 to supply current to a horn relay 92 to sound a horn of the lift truck. Details of the joystick and the selective functions will be discussed below with reference to FIGS. 4-7. The controller 80 also coordinates the electrical power distribution from the one battery source 84 to the traction motor 86 and the pump motor 12. If the battery voltage is low and inadequate power remains to meet the demand of both motors, for example, the controller 80 will reduce the supply of electric power to the pump motor 12 while maintaining the power supply to the traction motor 86 to permit the lift truck to be moved to charging station, for example.

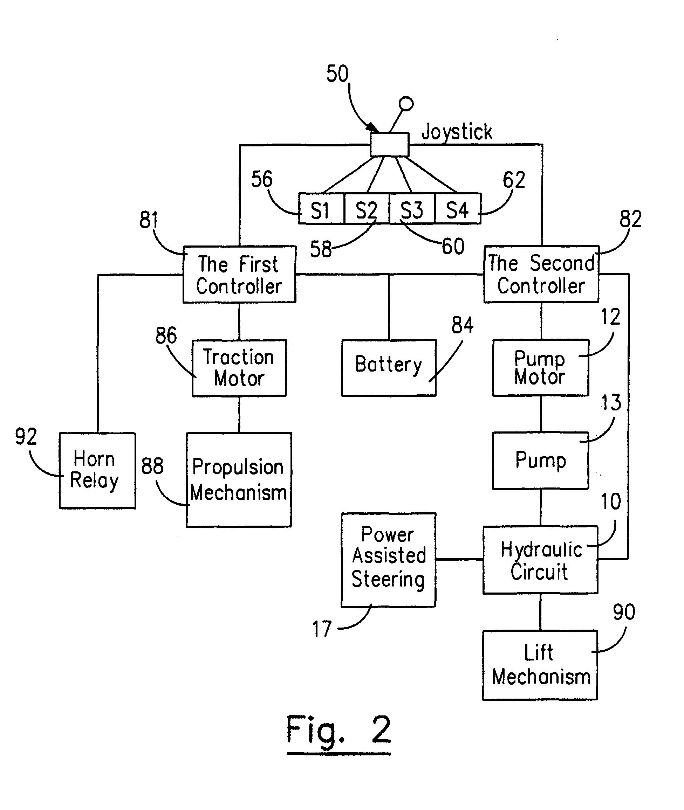

A second embodiment of the invention is illustrated in FIG. 2. The second embodiment is similar to the system shown in FIG. 1, except that two controllers 81 and 82 rather than the single controller 80 shown in FIG. 1 control the traction motor and the pump motor. The first controller 81 is connected to the traction motor 86 and the battery 84, and provides pulse width modulated DC or AC current from the battery 84 to the pump motor 12. The joystick 50 and the switches 56 through 62 are electrically connected to the two respective controllers 81 and 82. The first controller 81 is also connected to the horn relay 92. The pump motor 12 is connected to the pump 13 as shown in FIG. 1. The pump 13 is connected to the hydraulic circuit 10 through which pressurized hydraulic fluid is supplied to the power assisted steering 17 and the lift mechanism 90 of the lift truck. The first controller 81 is also linked to the second controller 82 so that the two controllers communicate with each other to control electric power distribution from the shared battery source 84 to the traction motor 86 and the pump motor 12. The first and second controllers 81 and 82 are preferably mounted in a single housing, to provide a compact structure which requires minimal cabling.

The controller 80 shown in FIG. 1 and the second controller 82 shown in FIG. 2 are connected to electrical components of the hydraulic circuit 10. This enables the controller to control a plurality of solenoid operated fluid valves including a variable proportional hydraulic cartridge for selective hydraulic functions. It also enables the controller to obtain feed-back signals from at least one sensor in the hydraulic circuit 10 to effect the control of the speed of revolution of the pump motor 12. Therefore, a fully proportional control for all the hydraulic functions of the lift truck is provided. The combination of motor speed control and variable proportional hydraulic control provides the desired hydraulic functions with the volume and pressure of hydraulic fluid required for a particular operation. The hydraulic pump 12 is controlled to run at idle speed whenever the lift truck is on if the lift truck is equipped with power assisted steering. The hydraulic pump motor speed is increased as required by demand for pressurized hydraulic fluid and returned to idle speed when the pressurized hydraulic fluid is no longer required. This avoids the wear caused by frequent starting from a dead stop under load. If the lift truck is not equipped with power assisted steering, the hydraulic pump is preferably turned off between lift function demands. When the frequent demands for pressurized hydraulic fluid imposed by power assisted steering are removed, it is more efficient to stop the hydraulic pump when there is no demand for lift functions. Details of the hydraulic circuit 10 and its connection to the controller 80 are described below in more detail.

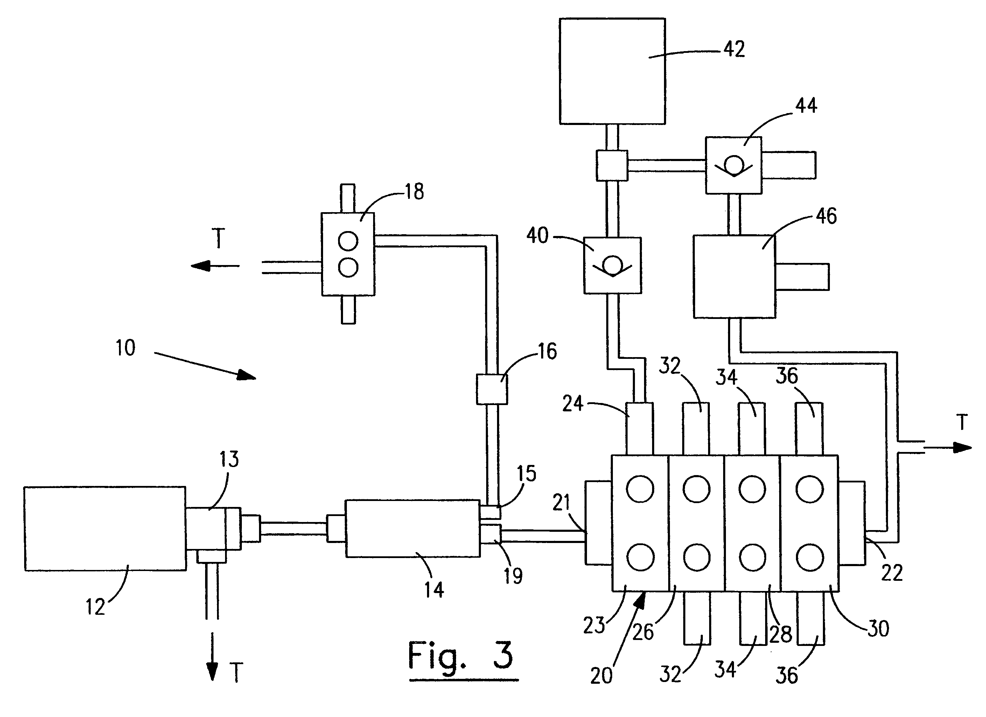

As illustrated in FIG. 3, a hydraulic circuit, generally indicated by reference 10, is used with the control system in the embodiment shown in FIG. 1. The pump 13 which is driven by the pump motor 12 is in fluid communication with a reservoir tank indicated by an arrow T, and a priority valve 14. A high priority port 15 of the priority valve 14 is connected to an "on demand" pressure switch 16 and a torque generator 18 which generates torque using the pressurized fluid for power assisted steering. A low priority port 19 of the priority valve 14 communicates with a valve block 20 through an inlet 21. The valve block 20, is connected through an outlet 22 to the tank as indicated by the arrow T. The valve block 20 includes a lift valve 23 which is actuated by a solenoid 24, tilt valves 26, reach valve 28 and a side-shift valve 30 which are actuated, respectively, by the solenoids 32, 34 and 36. The lift valve 23 communicates with a lift cylinder 42 through a check valve 40 which is a one-way valve that permits the fluid to flow from the lift valve 23 to the lift cylinder 42, but not in reverse. The lift cylinder 42 is a single acting cylinder for raising and lowering the lift mechanism. The check valve 40 ensures that the pressurized fluid only passes through to the lift cylinder and no fluid returns in order to prevent the lift mechanism from lowering if the supply of pressurized fluid is interrupted. A solenoid check valve 44 is provided between the lift cylinder 42 and a proportional valve 46 which is in fluid communication with the reservoir tank. The solenoid check valve 44 is opened to drain fluid from the lift cylinder under a pressure induced by the weight of the lift mechanism. The proportional valve 46 controls the rate of the fluid flow from the lift cylinder to enable controlled lowering of the lift mechanism.

A double-acting cylinder (not shown) or two single-acting cylinders (not shown) are connected to the tilt valves 26 for controlling up and down tilt of the lift mechanism. Similarly, reach valves 28 control a cylinder(s) for moving the lift mechanism toward and away from a front of the lift truck, which is referred to as "reach". A side-shift cylinder(s) controlled by valves 30 move the lift mechanism left and right with respect to the front of the lift truck.

The "on demand" pressure switch 16 in the hydraulic circuit 10 is electrically connected to the controller 80. The on-demand pressure switch generates an electrical signal detected by the controller 80 when the "on demand" pressure switch 16 senses a rise in the pressure of the pressurized hydraulic fluid. The solenoids 24, 32, 34 and 36 are electrically connected to the controller 80 and actuated by signals from the controller 80, respectively. Also electrically connected to the controller 80, are the solenoid check valve 44 and the proportional valve 46. The solenoid check valve 44 is actuated by a current switched by the controller 80 and the proportional valve 46 varies a fluid flow rate therethrough in response to a current switched by the controller.

A first joystick assembly 50, illustrated in FIG. 4, is used as an operator interface to control propulsion of the lift truck and the lift mechanism of the truck. The joystick assembly 50 includes a joystick 52 operably mounted to a base housing 53. The joystick 52 has a top end 54 and a grip beneath the top end 54. Button switches 56, 58 and 60 are provided on one side of the grip to permit the operator to select one of lifting and lowering, tilt, reach and side-shift functions. The function of each button switch is mapped in the controller in accordance with preference. A button switch 62 is mounted to the other side of the grip. The button switch 62 is typically used for sounding a horn (not illustrated) mounted to the vehicle. The joystick normally rests in a vertical orientation as shown in FIG. 4 and FIG. 5. The top end 54 of the joystick is movable simultaneously along a first (Y) axis and a second (X) axis which are at right angles to each other as shown in FIG. 5. The base housing 53 contains an electrical signal generating device which is not shown because it is well known in the art. The electrical signal generating device is electrically connected to the controller 80 and is able to output different signals to the controller 80 in response to the different positions of the joystick 52 and the button switches 56, 58 and 60.

FIG. 5 shows some of the different positions of the joystick. The positions 64, 66, 68 and 70 shown in broken lines indicate the extremities of travel of the top end 54 of the joystick 52 as it is moved along the Y and X axis. The top end 54 of the joystick can be moved to any position within the circular line 71, one potential position being indicated by the reference 72, for example. Tilting the top end 54 of the joystick 52 forward along the Y axis drives the lift truck in a forward direction, the speed of the lift truck depending on the extent of forward tilt of the joystick 52. Tilting the joystick rearward drives the lift truck in a rearward direction, the speed of rearward movement depending on the extent to which the joystick 52 is tilted rearwardly.

Vertical movement of the lift mechanism is controlled by tilting the joystick to either side of the Y axis. Tilting the joystick to the right raises the lift mechanism while tilting the joystick to the left lowers the lift mechanism. The three button switches 54, 56 and 58 are preferably placed in alignment on one side of the grip portion of the joystick to permit the operator to tilt the lift mechanism up or down, to move the lift mechanism toward and away from a front of the lift truck, or to move the lift mechanism left or right with respect to the front of the lift truck. The selection of one of the button switches overrides vertical movement of the lift mechanism. All operations of the lift mechanism are controlled in the same way as the truck speed is controlled in that the farther the joystick is tilted in a sideways direction along the X axis, the faster the lift mechanism responds to a selected function. When the joystick is in positions 64 and 66, the traction motor is operated at a programmed top speed. When the joystick 52 is in position 68, the pump motor is operated at a top selected speed for each function. However, when the joystick is positioned to the left of the Y axis, the controller 80 responds only to signals from the on-demand pressure switch 16 to control the speed of the hydraulic pump motor 12 because the lowering of the lift mechanism 90 does not require a supply of pressurized hydraulic fluid. The speed at which the lift mechanism 90 is lowered depends on the rate at which fluid drains from the lift cylinder 42, which is controlled by the proportional valve 46. If, however, one of the button switches 56, 58 or 60 is selected and the joystick 52 is tilted to the left of the Y axis, the controller 80 responds to the position of the joystick to control the speed of the hydraulic pump motor. This is more fully explained below with reference to the operation of the system.

The joystick 52 may be moved to the position 72, for example, as illustrated in FIG. 5 in which the position of joystick 52 simultaneously controls both the truck movement and the movement of the lift mechanism.

It is well understood that the structure of the human wrist tends to cause a certain side tilt in a joystick as it is tilted forwards and backwards along the Y axis. Consequently, a threshold area may be set within the controller so that a certain degree of side tilt is ignored in order to avoid accidental activation of lift functions as lift truck propulsion is controlled. The dotted parallel lines 74 shown in FIG. 5 indicate a threshold area set for this purpose. When the top end 54 of the joystick 52 is moved along the Y axis, any tilting away from the Y axis that is within the threshold area defined by the two parallel lines 74, is by the controller and no lift mechanism response is generated. In order to further ensure that unintentional movement of the lift mechanism is avoided, the threshold area may be mapped to individual preference, or the like. For example, as shown by the dotted and dashed lines of FIG. 5, indicate a proportional threshold area set for the first motor control. The threshold area defined by lines 76 increases in width as it extends farther away from the X axis. This renders the joystick less sensitive to side tilt to avoid unwanted lift function while the lift truck is driven at a high speed.

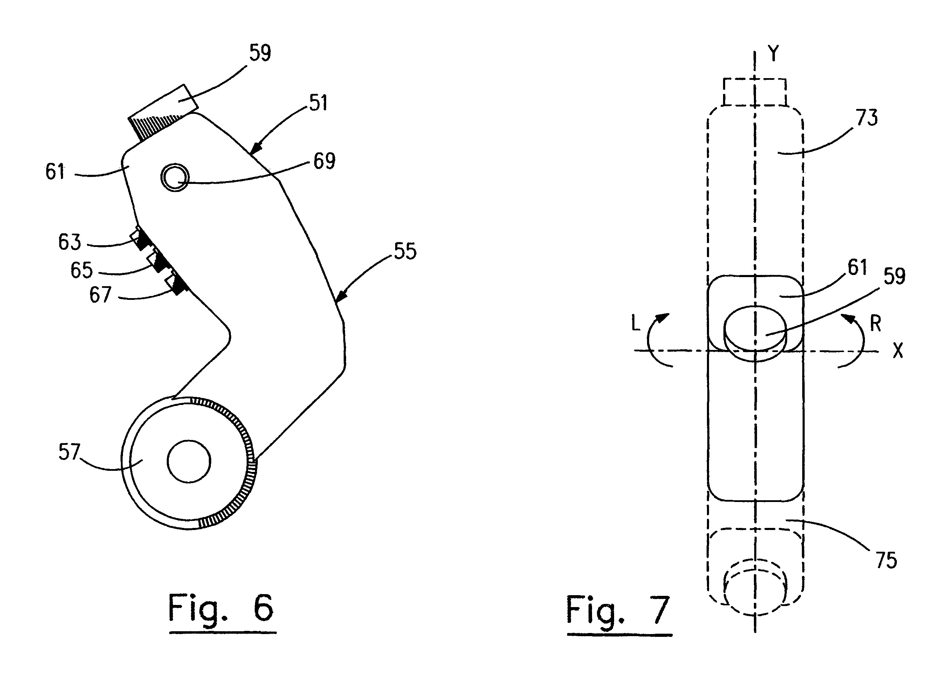

Another embodiment of a joystick assembly 51 is illustrated in FIG. 6. The joystick assembly includes a joystick 55 and a base portion 57 which is operably connected to a signal generating device (not shown). A thumb wheel 59 is mounted to a top end 61 of the joystick 55. The thumb wheel 59 is rotatable around an axis that is perpendicular to the thumb wheel 59. Three button switches 63, 65 and 67 are provided on a front of the top end 61 to permit selection of different hydraulic functions. A button switch 69 is provided on the left side of the top end 61 of the joystick 55 for sounding a horn. As explained above, any of the button switches 63, 65, 67 and 69 may be mapped to any one of the functions.

As illustrated in FIG. 7, the joystick 55 is moveable along the Y axis to control the speed and direction of revolution of the first electric motor 12, similar to the joystick shown in FIG. 4 and FIG. 5. The positions 73 and 75 are the extremities of travel for the joystick 55. In positions 73 and 75, the lift truck is driven at a pre-selected top speed. The joystick is not tiltable along the X axis. Rather, rotation of the thumb wheel 59 in either direction indicated by arrows L and R controls the speed of the second electric motor 12 and the direction of movement of the lift mechanism 90. The selection of bottom switches 63, 65 and 67 enable the operator to select the hydraulic functions of the lift mechanism, in the same way as described above with reference to FIGS. 4 and 5.

In operation, the operator controls drive speed and direction of the lift truck as well as the position of the hydraulic lift mechanism with one hand using the joystick 51, 52 while steering with the other hand. If the operator moves the joystick 51, 52 directly along the Y axis, he/she controls only the speed and direction of the lift truck. Likewise, manipulation of the joystick by the operator to represent a movement along the X axis controls only the lift functions. However, the operator may simultaneously control propulsion of the lift truck and the lift functions. For example, the operator may move the joystick to any position within the area defined by the circle 71 in FIG. 5. When the operator moves the joystick to the position 72, for example, the lift truck is driven forward at a moderate speed while the lift mechanism is also raised at a moderate speed. With the joystick in the position 72, if the operator wants to tilt the lift mechanism forward, extend the reach of the lift mechanism or to shift the mechanism to the right, instead of raising the lift mechanism, the operator presses one of the appropriate button switches 56, 58 or 60. If he/she wants to sound the horn, the operator can press the button switch 62. All signals generated by the joystick and button switches are received by the controller (see FIG. 1). In response to the signals received from the joystick, the controller supplies pulse width modulated DC or AC current from the battery to the propulsion motor and the pump motor. The controller also reverses the direction of rotation of the traction motor as commanded by the position of the joystick with respect to the Y axis.

The invention therefore provides a controller for the hydraulic pump motor which drives the hydraulic pump only on demand and in direct relation to command signals so that hydraulic functions are controlled by direct control of the pump motor as well as by incremental opening of the control valves. With this arrangement, 'the pump motor is idled at about 10% capacity while the lift truck is on and there is no demand for pressurized hydraulic fluid for the lift mechanism or for the power-assisted steering. This permits the realization of significant energy savings and contributes to battery life. This also prevents the damage caused by starting the pump motor and the pump under load and therefore reduces heat in the hydraulics and wear and tear on the components.

The pressurized fluid is pumped from the tank (indicated by the arrow T in FIG. 3) to the priority valve 14. The pressurized fluid from the pump is routed through the high priority port 15 to the torque generator 18 for the power assisted steering. Excess fluid passes through the low priority port 19 to be used for other hydraulic functions. When the lift truck is moving in a straight line or stops and no pressurized fluid is required for the power-assisted steering, the torque generator is in a neutral position and the pressurized fluid exits from the torque generator 18 to the tank. When the operator turns the steering wheel, the torque generator 18 is moved away from its neutral position and causes a rise in pressure of the pressurized fluid . The on-demand pressure switch 16 senses the rise in pressure of the pressurized fluid and generates a signal detected by the controller. The controller responds to the signal by increasing the pulse width of the drive controller which causes the pump motor to run faster and more pressurized fluid is therefore supplied through the priority valve 14 to the torque generator 18.

In response to the signals generated by a selection of a button switch 56, 58 or 60, the controller actuates one of the solenoids 32, 34 or 36 to open one of the valves 26, 28 or 30. Concurrently, the controller adjusts the pulse width of the drive controller to control the pump motor speed to ensure that the pump produces the required volume of pressurized fluid in response to the position of the joystick which determines motor speed. The pressurized fluid required for the hydraulic functions of the lift mechanism flows from the low priority port 19 of priority valve 14 to the inlet 21 of the valve block 20. When the joystick is placed in a position to the right of the Y axis (position 72, FIG. 5) or the thumb wheel 59 is rotated right (FIG. 7) and the lift function is selected, the pressurized fluid flows through the one-way check valve 40 and into the lift cylinder 42. The solenoid check valve 44 is closed during the lift function to ensure all pressurized fluid flowing through valve 23 is trapped in the lift cylinder 42. When the operator moves the joystick to the position 70 (FIG. 5) to lower the lift mechanism, the controller opens the solenoid check valve 44 and the proportional valve 46 to permit the hydraulic fluid to drain from the lift cylinder 42. In position 70, the proportional valve 46 is open to a pre-selected maximum because the top of the joystick is positioned at the extremity of its travel to the left so that the lift mechanism is lowered at the fastest speed. If the joystick is moved from the position 70 to its vertical orientation, shown as a solid line in FIG. 5, the proportional valve 46 is moved from a fully opened position to a fully closed position. When the joystick is placed in any position between the position 70 and the vertical orientation position, the proportional valve 46 is accordingly positioned between the fully opened and the fully closed positions. Pressurized fluid which enters the valve block 20 that is not required for the lift cylinder 42, passes through the valve block 20 and exits from the outlet 22 to the tank.

### INDUSTRIAL APPLICABILITY

A compact and energy efficient control system for an electric lift truck is provided. The control system which includes one or two controllers with a single operator interface for controlling both truck propulsion and all hydraulic functions of the lift mechanism of the electric lift truck enables minimal electrical cabling and conserves space. A joystick provides a convenient and intuitive interface to operate the lift truck and the lift mechanism. A combination of direct control of the hydraulic pump motor speed to control the pressurised hydraulic fluid supply, rather than control by variable opening of valves, and an on-demand pressure switch used to ensure that a proportional control of hydraulic fluid pressure is achieved ensure that the lift truck operates at high energy efficiency. This is especially important for lift trucks powered by a battery. Hydraulic pump motor and pump service life in electric lift trucks equipped with power assisted steering is also improved because the controller runs the pump at an idle speed when there is no demand for pressurized hydraulic fluid. Wear and stress caused by frequent dead starts under load are therefore avoided.

## Claims

1. A control system for an electric lift truck which includes a drive motor (86) for truck propulsion and a pump motor (12) connected to a hydraulic pump (13) for supplying pressurized hydraulic fluid through a hydraulic circuit (10) to a hydraulic lift mechanism (90), the control system having an operator interface including a lever for an operator to control the propulsion of the electric lift truck and a plurality of functions of the hydraulic lift mechanism (90), the operator interface further including switches for controlling at least the direction of travel of the electric lift truck, **CHARACTERIZED in that** said control system further includes an electronic controller (80) connected to said operator interface (50) to provide an integrated drive and hydraulic control system for the electric lift truck, the electronic controller receiving from the operator interface (50) electronic control signals, and in response to the control signals the electronic controller controls a speed and a direction of revolution of a traction motor (86), a speed of revolution of a hydraulic pump motor (12), and incremental opening of control valves (32, 34, 36, 44, 46).

2. A control system as claimed in claim 1 wherein the controller (80) is a pulse-width modulation controller and the traction and pump motors (86), (12) are DC or AC motors.

3. A control system as claimed in claims 1 or 2 further comprising a power assisted steering system (17) to which a hydraulic fluid is supplied with high priority from the pump (13).

4. A control system as claimed in claim 3 further comprising an on-demand pressure switch (16) that is connected to the hydraulic circuit (10) between the hydraulic pump (13) and the power assisted steering system (17) so that the on-demand pressure switch is triggered by a pressure rise in a supply of hydraulic fluid for the power assisted steering system (17), the on-demand pressure switch generating an electric signal to prompt the controller (80) to change a speed of revolution of the pump motor (12) from a first speed to a second speed which is faster than the first speed.

5. A control system as claimed in claim 4 wherein the controller (80) executes an algorithm for measuring electric signals from the on-demand pressure switch (16) and the interface (50) respectively, and controls the speed of revolution of the pump motor (12) in response to the signals so that the hydraulic pump (13) meets a demand of both of the power assisted steering system (17) and the hydraulic lift mechanism (90).

6. A control system as claimed in claims 3, 4 or 5 wherein the controller (80) controls the pump motor (12) to operate at an idle when no hydraulic fluid pressure is required for the hydraulic functions of the lift mechanism (90) or the power assisted steering system (17).

7. A control system as claimed in claim 6 wherein the controller (80) reduces an electric power supply to the pump motor (12) and maintains an electric power supply to the traction motor (86) to permit the lift truck to be moved when a battery voltage is below a predefined threshold.

8. A control system as claimed in any preceding claim wherein the functions of the hydraulic lift mechanism (90) are enabled by:
a lift cylinder (42) for lifting and lowering the lift mechanism (90);
a tilt cylinder for tilting the lift mechanism (90);
a reach cylinder for moving the lift mechanism (90) toward and away from a front of the lift truck;
a side-shift cylinder for moving the lift mechanism (90) left and right with respect to the front of theft truck; and
a solenoid-valve block (20) for selectively communicating the fluid pressure from the pump (13) to the lift, tilt, reach or side-shift cylinder.

9. A control system as claimed in claims 3, 4 or 5 wherein the power assisted steering system (17) comprises:
a torque generator (18);
a priority valve (16) with a low priority to the hydraulic lift mechanism (90) to ensure that an operative volume of hydraulic fluid is delivered to the torque generator (18) at all times.

10. A control system as claimed in any preceding claim wherein the interface (50) comprises a joystick (52) enabled to generate signals representative of movement simultaneously with respect to a first axis and a second axis so that the speed and direction of revolution of the traction motor (86) is controlled by the signals representative of movement with respect to the first axis and the functions of the hydraulic lift mechanism (90) are controlled by the signals representative of movement with respect to the second axis.

11. A control system as claimed in claim 10 wherein the interface (50) comprises a joystick (52) having a top end (54) moveable simultaneously along the first axis (Y) and the second axis (X) which are at right angles to each other so that the speed and direction of revolution of the traction motor (86) is controlled by a movement of the joystick (52) along the first axis (Y) and the functions of the hydraulic lift mechanism (90) are simultaneously controlled by a movement of the joystick (52) along the second axis (X).

12. A control system as claimed in claim 10 wherein the interface (50) comprises a joystick (55) having a top end (61) moveable along the first axis (Y) and a thumb wheel (59) rotatably mounted to a top end (61) of the joystick (55), the joystick being connected to the controller (80) so that a speed and direction of the traction motor (86) is controlled when the top end (61) of the joystick (55) is moved along the first axis, and the functions of the hydraulic lift mechanism (90) are controlled by a rotation of the thumb wheel (59).

13. A control system as claimed in claims 10, 11 or 12 wherein the joystick (52) further comprises a plurality of buttons which may be pressed to select hydraulic function options so that a control function of the joystick is user selectable.

14. A control system as claimed in claim 13 wherein the plurality of buttons (56), (58), (60) and (62) are mapped in the controller (80) so that when signals representative of movement with respect to the second axis (X) are detected by the controller, a tilt cylinder, a reach cylinder, a side-shift cylinder or a lift cylinder (42) is controlled in accordance with a way in which the buttons are mapped.

15. A control system as claimed in claim 14 wherein the plurality of buttons include a button mapped to control a horn relay (92), and the controller (80) switches battery current to energize the horn relay to sound a horn when that button is pressed.

16. A control system as claimed in any one of claims 10, 11, 12, 13, 14 or 15 further comprising a proportional valve (46) and a solenoid check valve (44) connected in series between a lift cylinder (42) and a tank for hydraulic fluid, the solenoid check valve (44) and proportional valve (46) being controlled by an electric current switched by the controller (80) so that when the joystick (52) is operated to lower the lift mechanism, a lowering speed of the lift mechanism (90) is controlled.

17. A control system as claimed in any one of claims 10, 11, 12, 13, 14 or 15 wherein the joystick (52) is connected to the controller (80) so that the speed of revolution of the traction motor (86) is increased when the top end (54) of the joystick (52) is tilted away from a vertical orientation along the first axis (Y), and the speed of revolution of the pump motor (12) is increased when signals representative of movement with respect to the second axis are detected by the controller, except in a lift mechanism (90) lowering operation, and the direction of revolution of the traction motor (86) is changed when the top end (54) of the joystick (52) is tilted from the vertical orientation in opposite directions along the first axis (Y) and the direction of a movement of the lift mechanism (90) is changed when the signals representative of movement with respect to the second axis indicate a change of direction.

18. A control system as claimed in claims 8 or 9 further comprising a check valve (40) between the solenoid-valve block (20) and the lift cylinder (42) to prevent the lift mechanism (90) from falling if a supply of hydraulic fluid is interrupted.

19. A control system as claimed in claim 1 wherein the control system includes a first controller (81) and a second controller (82), the first controller controlling the traction motor and the second controller controlling the pump motor and hydraulic functions of the lift truck, the first and second controllers (81), (82) being respectively connected to the interface (50) and mounted in a single housing to provide a compact structure which requires minimal cabling.

20. A control system as claimed in claim 19 wherein the interface (50) comprises a joystick (52) having a top end (54) moveable simultaneously along a first and a second axis (Y), (X) that are at right angles to each other, the joystick (52) being connected to the first and second controllers (81), (82) so that the speed and direction of the traction motor (86) is controlled when the top end (54) of the joystick (52) is moved along the first axis (Y), and the functions of the hydraulic lift mechanism (90) and the pump motor (12) are controlled by a movement of the top end (54) of the joystick (52) along the second axis (X).

21. A control system as claimed in any one of claims 16 through 19 wherein if the lift truck is equipped with power assisted steering, the controller (80) generates a signal to cause the pump motor (12) to operate at an idle speed when the joystick (52) is in the vertical orientation or the joystick is manipulated for the lowering function of the hydraulic lift mechanism (90).

22. A control system as claimed in claim 11 wherein the controller (80) is mapped with threshold areas (74), (76) adjacent each side of the first axis (Y) and signals indicative of movement of the joystick (52) along the second axis (X) within the threshold areas are ignored by the controller so that the lift mechanism does not respond to slight tilting of the joystick as the joystick is moved along the first axis (Y).

23. A control system as claimed in claim 22 wherein a width of the threshold areas (76) increases proportionally with movement away from a vertical position along the first axis (Y).

## Patentansprüche

1. Ein Steuersystem für einen elektrischen Hubwagen, der einen Antriebsmotor (86) für den Antrieb des Wagens enthält sowie einen an eine Hydraulikpumpe (13) angeschlossenen Pumpenmotor (12) für die Zufuhr von Druckflüssigkeit durch einen Hydraulikkreislauf (10) zu einem hydraulischen Hebemechanismus (90), wobei das Steuersystem eine Benutzerschnittstelle einschließlich eines Hebels aufweist, mit dem ein Bediener den Antrieb des elektrischen Hubwagens sowie eine Vielzahl von Funktionen des hydraulischen Hebemechanismus (90) steuern kann, die Benutzerschnittstelle des weiteren Schalter für zumindest die Steuerung der Fahrtrichtung des elektrischen Hubwagens umfasst, **GEKENNZEICHNET dadurch, dass** besagtes Steuersystem des weiteren einen elektronischen, an besagte Benutzerschnittstelle (50) angeschlossenen Regler (80) enthält, um ein integriertes Antriebs- und Hydraulik-Steuersystem für den elektrischen Hubwagen zu bilden, bei dem der elektronische Regler von der Benutzerschnittstelle (50) elektronische Steuersignale erhält und der elektronische Regler in Reaktion auf die Steuersignale die Geschwindigkeit und die Umdrehungsrichtung eines Traktionsmotors (86), die Umdrehungsgeschwindigkeit eines Hydraulikpumpenmotors (12) und das inkrementale Öffnen von Steuerventilen (32, 34, 36, 44, 46) steuert.

2. Ein Steuersystem nach Anspruch 1, wobei der Regler (80) ein Pulsdauermodulationsregler und der Traktions- und Pumpenmotor (86), (12) Gleichstromoder Wechselstrommotoren sind.

3. Ein Steuersystem nach Anspruch 1 oder 2, das darüber hinaus ein Servo-Lenksystem (17) umfasst, zu welchem von der Pumpe (13) eine Druckflüssigkeit mit hoher Priorität gefördert wird.

4. Ein Steuersystem nach Anspruch 3, das darüber hinaus einen Bedarfsdruckschalter (16) umfasst, der zwischen der Hydraulikpumpe (13) und dem Servo-Lenksystem (17) mit dem Hydraulikkreislauf (10) verbunden ist, so dass der Bedarfsdruckschalter durch einen Druckanstieg bei der Zufuhr der Druckflüssigkeit für das Servo-Lenksystem ausgelöst wird, woraufhin der Bedarfsdruckschalter ein elektrisches Signal an den Regler (80) generiert, um die Umdrehungszahl des Pumpenmotors (12) von einer ersten Geschwindigkeit in eine zweite Geschwindigkeit zu ändern, die höher als die erste Geschwindigkeit ist.

5. Ein Steuersystem nach Anspruch 4, wobei der Regler (80) einen Algorithmus für das Messen der jeweiligen elektrischen Signale vom Bedarfsdruckschalter (16) und der Schnittstelle ausführt und die Umdrehungsgeschwindigkeit des Pumpenmotors (12) in Reaktion auf die Signale so steuert, dass die Hydraulikpumpe (13) sowohl den Bedarf des Servo-Lenksystems (17) als auch des hydraulischen Hebemechanismus (90) erfüllt.

6. Ein Steuersystem nach Anspruch 3, 4 oder 5, wobei der Regler (80) den Pumpenmotor (12) so steuert, dass dieser im Leerlauf wirkt, wenn kein Druck der Druckflüssigkeit für die Hydraulikfunktionen des Hebemechanismus (90) oder des Servo-Lenksystems (17) benötigt wird.

7. Ein Steuersystem nach Anspruch 6, wobei der Regler (80) die Stromzufuhr zum Pumpenmotor (12) vermindert und die Stromzufuhr zum Traktionsmotor (86) aufrecht erhält, um das Bewegen des Hubwagens zu ermöglichen, wenn eine Batteriespannung unter einen vordefinierten Schwellwert sinkt.

8. Ein Steuersystem nach allen vorangegangenen Ansprüchen, wobei die Funktionen des hydraulischen Hebemechanismus (90) ermöglicht werden durch:
einen Hebezylinder (42) für das Heben und Senken des Hebemechanismus (90);
einen Neigezylinder für das Neigen des Hebemechanismus (90);
einen Schiebezylinder für das Bewegen des Hebemechanismus zur Front des Hubwagens hin und von dieser weg;
einen Querzylinder für das Bewegen des Hebemechanismus (90) nach links und rechts in Bezug auf die Front des Wagens; und
einen Magnetventilblock (20) für das selektive Übermitteln des Flüssigkeitsdrucks von der Pumpe (13) an dem Hebe-, Neige-, Schiebe- oder Querzylinder.

9. Ein Steuersystem nach Anspruch 3, 4 oder 5, wobei das Servo-Lenksystem (17) folgendes umfasst:
einen Drehmomenterzeuger (18);
ein Prioritätsventil (16) mit niedriger Priorität zum hydraulischen Hebemechanismus (90), um sicherzustellen, dass dem Drehmomenterzeuger (18) jederzeit ein Betriebsvolumen an Druckflüssigkeit zugeführt wird.

10. Ein Steuersystem nach allen vorangegangenen Ansprüchen, wobei die Schnittstelle (50) einen Steuerknüppel (52) umfasst, dem es ermöglicht ist, simultan für eine Bewegung stellvertretende Signale in Bezug auf eine erste Achse und eine zweite Achse zu erzeugen, so dass die Geschwindigkeit und Umdrehungsrichtung des Traktionsmotors (86) von den für eine Bewegung stellvertretenden Signalen in Bezug auf die erste Achse gesteuert werden und die Funktionen des hydraulischen Hebemechanismus (90) von den für eine Bewegung stellvertretenden Signalen in Bezug auf die zweite Achse gesteuert werden.

11. Ein Steuersystem nach Anspruch 10, wobei die Schnittstelle (50) einen Steuerknüppel (52) mit einen oberen Teil (54) umfasst, das simultan entlang der zueinander in einem Winkel von 90 Grad stehenden ersten Achse (Y) und zweiten Achse (X) beweglich ist, so dass die Geschwindigkeit und Umdrehungsrichtung des Traktionsmotors (86) durch eine Bewegung des Steuerknüppels (52) entlang der ersten Achse (Y) gesteuert werden und die Funktionen des hydraulischen Hebemechanismus (90) simultan durch eine Bewegung des Steuerknüppels (52) entlang der zweiten Achse (X) gesteuert werden.

12. Ein Steuersystem nach Anspruch 10, wobei die Schnittstelle (50) einen Steuerknüppel (55) mit einem oberen Teil (61) umfasst, das entlang der ersten Achse (Y) beweglich ist und ein Daumenrad (59), das drehbar auf dem oberen Teil (61) des Steuerknüppels (55) angebracht ist, und wobei der Steuerknüppel zum Regler (80) verbunden ist, so dass Geschwindigkeit und Richtung des Traktionsmotors (86) gesteuert werden, wenn das obere Teil (61) des Steuerknüppels (55) entlang der ersten Achse bewegt wird, und so dass die Funktionen des hydraulischen Hebemechanismus (90) durch Rotation des Daumenrades (59) gesteuert werden.

13. Ein Steuersystem nach Anspruch 10, 11 oder 12, wobei der Steuerknüppel (52) des weiteren eine Vielzahl von Knöpfen umfasst, die gedrückt werden können, um hydraulische Funktionsoptionen auszuwählen, so dass die Steuerungsfunktion des Steuerknüppels vom Benutzer auswählbar ist.

14. Ein Steuersystem nach Anspruch 13 wobei die Vielzahl von Knöpfen (56), (58), (60) und (62) im Regler (80) zugeordnet sind, so dass, wenn für eine Bewegung stellvertretende Signale in Bezug auf eine zweite Achse (X) vom Regler entdeckt werden, ein Neigezylinder, ein Schiebezylinder, ein Querzylinder oder ein Hebezylinder (42) in Übereinstimmung mit der Weise gesteuert werden, in welcher die Knöpfe zugeordnet sind.

15. Ein Steuersystem nach Anspruch 14, wobei die Vielzahl von Knöpfen einen Knopf umfasst der so zugeordnet ist, dass er ein Hornrelais (92) steuert und der Regler (80) Batteriestrom einschaltet, um das Hornrelais mit Energie zu versorgen, so dass ein Horn ertönt, wenn jener Knopf gedrückt wird.

16. Ein Steuersystem nach Anspruch 10, 11, 12, 13, 14 oder 15, das darüber hinaus ein Proportionalventil (46) und ein als Magnetventil ausgeführtes Regelventil (44) umfasst, die in Serie zwischen einem Hebezylinder (42) und einem Tank für Druckflüssigkeit verbunden sind, wobei das als Magnetventil ausgeführte Regelventil (44) und das Proportionalventil (46) durch einen von Regler (80) geschalteten elektrischen Strom gesteuert werden, so dass, wenn der Steuerknüppel (52) bedient wird, um den Hebemechanismus zu senken, die Senkgeschwindigkeit des Hebemechanismus (90) geregelt wird.

17. Ein Steuersystem nach Anspruch 10, 11, 12, 13, 14 oder 15, wobei der Steuerknüppel (52) mit dem Regler (80) verbunden ist, so dass die Umdrehungsgeschwindigkeit des Traktionsmotors (86) erhöht wird, wenn das obere Teil (54) des Steuerknüppels (52) von einer Vertikalausrichtung entlang der ersten Achse (Y) weg geneigt wird, und so dass die Umdrehungsgeschwindigkeit des Pumpenmotors (12) erhöht wird, wenn für eine Bewegung stellvertretende Signale in Bezug auf die zweite Achse vom Regler entdeckt werden, ausgenommen bei einem Senkvorgang des Hebemechanismus (90), und so dass die Umdrehungsrichtung des Traktionsmotors (86) geändert wird, wenn das obere Teil (54) des Steuerknüppels (52) in entgegengesetzter Richtung entlang der ersten Achse (Y) von einer Vertikalausrichtung weg geneigt wird und so dass die Richtung einer Bewegung des Hebemechanismus (90) geändert wird, wenn für eine Bewegung stellvertretende Signale in Bezug auf die zweite Achse eine Richtungsänderung anzeigen.

18. Ein Steuersystem nach Anspruch 8 oder 9, das darüber hinaus ein Regelventil (40) zwischen dem Magnetventilblock (20) und dem Hebezylinder (42) umfasst, um zu verhindern, dass der Hebemechanismus (90) herabfällt, wenn die Zufuhr der Druckflüssigkeit unterbrochen wird.

19. Ein Steuersystem nach Anspruch 1, wobei das Steuersystem einen ersten Regler (81) und einen zweiten Regler (82) umfasst, wobei der erste Regler den Traktionsmotor und der zweite Regler den Pumpenmotor sowie die Hydraulikfunktionen des Hubwagen steuert, und der erste und der zweite Regler (81), (82) jeweils mit der Schnittstelle (50) verbunden und in einem einzigen Gehäuse montiert sind, um eine kompakte Struktur zu schaffen, die ein Minimum an Verkabelung erfordert.

20. Ein Steuersystem nach Anspruch 19, wobei die Schnittstelle (50) einen Steuerknüppel (52) mit einem oberen Teil (54) umfasst, das simultan entlang einer zueinander in einem Winkel von 90 Grad stehenden ersten und zweiten Achse (Y), (X) beweglich ist, und der Steuerknüppel (52) mit dem ersten und dem zweiten Regler (81), (82) verbunden ist, so dass die Geschwindigkeit und Umdrehungsrichtung des Traktionsmotors (86) gesteuert wird, wenn das obere Teil (54) des Steuerknüppels (52) entlang der ersten Achse (Y) bewegt wird, und die Funktionen des hydraulischen Hebemechanismus (90) und des Pumpenmotors (12) von einer Bewegung des oberen Teils (54) des Steuerknüppels (52) entlang der zweiten Achse (X) gesteuert werden.

21. Ein Steuersystem nach Anspruch 16 bis 19, wobei, wenn der Hubwagen mit einem Servo-Lenksystem ausgestattet ist, der Regler (80) ein Signal generiert, das den Pumpenmotor (12) veranlasst, im Leerlauf zu wirken, wenn der Steuerknüppel (52) vertikal orientiert ist oder der Steuerknüppel für die Senkfunktion des hydraulischen Hebemechanismus (90) betätigt wird.

22. Ein Steuersystem nach Anspruch 11, wobei dem Regler (80) beiderseits an die erste Achse (Y) angrenzende Schwellbereiche (74), (76) zugeordnet sind und für eine Bewegung des Steuerknüppels (52) stellvertretende Signale entlang der zweiten Achse (X) innerhalb der Schwellbereiche vom Regler ignoriert werden, so dass der Hebemechanismus nicht auf ein leichtes Neigen des Steuerknüppels reagiert, wenn der Steuerknüppel entlang der ersten Achse (Y) bewegt wird.

23. Ein Steuersystem nach Anspruch 22, wobei die Breite der Schwellbereiche (76) proportional mit der Bewegung von der Vertikalposition weg entlang der ersten Achse (Y) zunimmt.

## Revendications

1. Un système de contrôle pour un chariot élévateur électrique qui comprend un moteur de commande (86) pour la propulsion du chariot et un moteur hydraulique (12) connecté à une pompe hydraulique (13) pour l'alimentation sous pression en fluide hydraulique à travers un circuit hydraulique (10) jusqu'à un mécanisme d'élévation hydraulique (90), le système de contrôle ayant une interface opérateur incluant un levier pour qu'un opérateur puisse contrôler la propulsion du chariot élévateur électrique ainsi que plusieurs fonctions du mécanisme d'élévation hydraulique (90), l'interface opérateur comprenant en outre des interrupteurs pour le contrôle d'au moins la direction du chariot élévateur électrique, **CARACTÉRISÉE** dans ce dit système de contrôle, qui inclut un contrôleur électronique (80) pour procurer une conduite intégrée et un système de contrôle hydraulique pour le chariot élévateur électrique, le contrôleur électronique recevant les signaux de contrôle électronique de l'interface opérateur (50), et en réponse à ces derniers, le contrôleur électronique dirige la vitesse et la direction de révolution d'un moteur de traction (85), la vitesse de révolution d'un moteur hydraulique (12), et l'ouverture graduelle des soupapes de contrôle (33, 34, 36, 44, 46).

2. Un système de contrôle, tel que détaillé dans la déclaration 1, dans lequel le contrôleur (80) est un contrôleur de modulation d'impulsions en durée et les moteurs de traction et hydraulique (86), (12) sont des moteurs à courant continu ou alternatif.

3. Un système de contrôle, tel que détaillé dans la déclaration 1 ou 2, comprenant de plus un système de direction servo-assistée (17) auquel un fluide hydraulique est fourni avec haute priorité de la pompe (13).

4. Un système de contrôle, tel que détaillé dans la déclaration 3, comprenant de plus un interrupteur de pression à la demande (16) qui est connecté au circuit hydraulique (10) entre la pompe hydraulique (13) et le système de direction servo-assistée (17) afin que l'interrupteur de pression à la demande soit déclenché par une augmentation de la pression de l'alimentation de fluide hydraulique pour le système de direction servo-assistée (17), l'interrupteur de pression à la demande générant un signal électrique pour inviter le contrôleur (80) à changer la vitesse de révolution de moteur hydraulique (12) d'une première vitesse à une seconde vitesse, laquelle est plus rapide que la première vitesse.

5. Un système de contrôle, tel que détaillé dans la déclaration 4, dont le contrôleur (80) exerce un algorithme pour la mesure des signaux électriques de l'interrupteur de pression à la demande (16) et l'interface (50), respectivement, et contrôle la vitesse de révolution du moteur hydraulique (12) en réponse aux signaux, afin que la pompe hydraulique (13) rencontre une demande du système de pression à la demande (17) et du mécanisme d'élévation hydraulique (90).

6. Un système de contrôle, tel que défini dans les déclarations 3, 4 ou 5, dans lequel le contrôleur (80) contrôle le moteur hydraulique (12) pour opérer au ralenti lorsqu'aucune pression de fluide hydraulique n'est pas requise pour les fonctions hydrauliques du mécanisme d'élévation hydraulique (90) ou du système de pression à la demande (17).

7. Un système de contrôle, tel que défini dans la déclaration 6, dans lequel le contrôleur (80) réduit l'alimentation en énergie électrique au moteur hydraulique (12) et maintient l'alimentation en énergie électrique au moteur de traction (86) pour permettre au chariot élévateur d'être déplacé lorsqu'une tension des batteries est inférieure au seuil prédéfini.

8. Un système de contrôle, tel que défini dans toute déclaration précédente, dans lequel les fonctions du mécanisme d'élévation hydraulique (90) sont activées par :
un cylindre de relevage (42) pour l'élévation et l'abaissement du mécanisme d'élévation hydraulique (90) ;
un vérin de basculement pour l'élévation du mécanisme d'élévation hydraulique (90) ;
un cylindre de portée pour le déplacement du mécanisme d'élévation hydraulique (90) vers et loin du devant de chariot élévateur ;
un cylindre transversal pour le déplacement du mécanisme d'élévation hydraulique (90) vers la droite et la gauche conformément au devant du chariot élévateur ; et
un électro-distributeur (20) pour la communication sélective de la pression de fluide de la pompe (13) au cylindre de relevage, de portée ou transversal.

9. Un système de contrôle, tel que défini dans les déclarations 3, 4 ou 5, dans lequel le système de pression à la demande (17) comprend :
un générateur de couple (18) ;
un clapet préférentiel (16) avec faible priorité sur le mécanisme d'élévation hydraulique (90) afin d'assurer qu'un volume d'opération ou fluide hydraulique est livré au générateur de couple (18) en tout temps.

10. Un système de contrôle, tel que défini dans toute déclaration précédente, dans lequel l'interface (50) comprend un levier de commande (52) activé pour générer des signaux représentant un mouvement simultané conformément à un premier axe et à un second axe afin que la vitesse et la direction de révolution du moteur de traction (86) soient contrôlées par les signaux représentant un mouvement conformément au premier axe et que les fonctions du mécanisme d'élévation hydraulique (90) soient contrôlées par les signaux représentant un mouvement conformément au second axe.

11. Un système de contrôle, tel que défini dans la déclaration 10, dans lequel l'interface (50) comprend un levier de commande (52) comportant une extrémité supérieure (54) réglable simultanément le long du premier axe (Y) et du second axe (X), lesquels ne sont pas à angle droit l'un l'autre, afin que la vitesse et la direction de révolution du moteur de traction (86) soient contrôlées par un mouvement du levier de commande (52) le long du premier axe (Y) et que les fonctions du mécanisme d'élévation hydraulique (90) soient contrôlées par un mouvement du levier de commande (52) le long du second axe (X)

12. Un système de contrôle, tel que défini dans la déclaration 10, dans lequel l'interface (50) comprend un levier de commande (55) ayant une extrémité supérieure (61) réglable le long du premier axe (Y) et une molette (59) montée en pivot à l'extrémité supérieure (61) du levier de commande (55), ce dernier étant connecté au contrôleur (80) afin que la vitesse et la direction du moteur de traction (86) soient contrôlées lorsque l'extrémité supérieure (61) du levier de commande (55) est déplacé le long du premier axe, et que les fonctions du mécanisme d'élévation hydraulique (90) soient contrôlées par une rotation de la molette (59).

13. Un système de contrôle, tel que défini dans les déclarations 10, 11 ou 12, dans lequel le levier de commande (52) comprend de nombreux boutons qui peuvent être sélectionnés pour choisir des options de fonction hydraulique afin qu'une fonction de contrôle du levier de commande soit sélectionnable par l'utilisateur.

14. Un système de contrôle, tel que défini dans la déclaration 13, dans lequel de nombreux boutons (56), (58), (60) et (62) sont configurés dans le contrôleur (80) afin que lorsque des signaux représentant des mouvements conformes au second axe (X) sont détectés par le contrôleur, un cylindre de basculement, de portée ou transversal (42) soit contrôlé conformément à la façon dont les boutons sont configurés.

15. Un système de contrôle, tel que défini dans la déclaration 14, dans lequel les nombreux boutons incluent un bouton configuré pour contrôler le relais de commande de l'avertisseur (92), et le contrôleur (80) commute le courant de la batterie pour alimenter le relais de commande de l'avertisseur pour émettre un son de klaxon lorsque le bouton est sélectionné.

16. Un système de contrôle, tel que défini dans les déclarations 10, 11, 12, 13, 14 ou 15, comprenant en outre une soupape proportionnelle (46) et un clapet de vérification du solénoïde (44) connectés en série entre un cylindre d'élévation (42) et un réservoir pour le fluide hydraulique, la soupape proportionnelle (46) et le clapet de vérification du solénoïde (44) étant contrôlés par un courant électrique commuté par le contrôleur (80) afin que le levier de commande (52) soit opéré pour abaisser le mécanisme d'élévation, une vitesse diminuée du mécanisme d'élévation hydraulique (90) est contrôlée.

17. Un système de contrôle, tel que défini dans les déclarations 10, 11, 12, 13, 14 ou 15, dans lequel le levier de commande (52) est connecté au contrôleur (80) afin que la vitesse de révolution du moteur de traction (86) soit augmenté lorsque l'extrémité supérieure (54) du levier de commande (52) est éloignée de l'orientation verticale le long du premier axe (Y), et la vitesse de révolution du moteur hydraulique (12) est augmentée lorsque des signaux représentant un mouvement conforme au second axe sont détectés par le contrôleur, sauf dans une opération d'abaissement du mécanisme d'élévation hydraulique (90), et que la direction de révolution du moteur de traction (86) est changée, lorsque l'extrémité supérieure (54) du levier de commande (52) est basculée de l'orientation verticale dans des directions opposées le long du premier axe (Y) et que la direction d'un mouvement du mécanisme d'élévation hydraulique (90) est modifiée lorsque les signaux représentant un mouvement conforme au second axe indiquent un changement de direction.

18. Un système de contrôle, tel que défini dans les déclarations 8 ou 9, comprenant de plus une soupape de vérification (40) entre un électro-distributeur (20) et le cylindre d'élévation (42) pour éviter que le mécanisme d'élévation hydraulique (90) ne tombe si une alimentation en fluide hydraulique est interrompue.

19. Un système de contrôle, tel que défini dans la déclaration 1, dans lequel le système de contrôle comprend un contrôleur principal (81) et un contrôleur secondaire (82), le contrôleur principal contrôlant le moteur de traction et le contrôleur secondaire contrôlant le moteur et les fonctions hydrauliques du chariot élévateur, les contrôleurs principal et secondaire (81), (82) étant respectivement connectés à l'interface (50) et montés dans un bâti simple pour procurer une structure compacte qui requiert un câblage minimum.

20. Un système de contrôle, tel que défini dans la déclaration 19, dans lequel l'interface (5) comprend un levier de commande (52) ayant une extrémité supérieure (54) réglable simultanément le long d'un premier et d'un second axes (Y), (X) qui sont à angle droit l'un l'autre, le levier de commande (52) étant connecté aux contrôleurs principal et secondaire (81), (82) afin que la vitesse et la direction du moteur de traction (86) soient contrôlées lorsque l'extrémité supérieure (54) du levier de commande (52) est déplacée le long du premier axe (Y) et que les fonctions du mécanisme d'élévation hydraulique (90) et le moteur hydraulique (12) sont contrôlés par un mouvement de l'extrémité supérieure (54) du levier de commande (52) le long du second axe (X).

21. Un système de contrôle, tel que défini dans les déclarations de 16 à 19, dans lequel si le chariot élévateur est équipé d'un système de direction servo-assistée, le contrôleur (80) génère un signal pour faire en sorte que le moteur hydraulique (12) opère à une vitesse ralentie lorsque le levier de commande (52) est orienté verticalement ou qu'il est manipulé pour la fonction d'abaissement du mécanisme d'élévation hydraulique (90).

22. Un système de contrôle, tel que défini dans la déclaration 11, dans lequel le contrôleur (80) est configuré avec les zones de seuil (74), (76) adjacentes de chaque côté du premier axe (Y) et les signaux indicateurs du mouvement du levier de commande (52) le long du second axe (X) en-dedans des zones de seuil sont ignorés par le contrôleur afin que le mécanisme d'élévation ne réponde pas au basculement léger du levier de commande pendant que ce dernier est déplacé le long du premier axe (Y).

23. Un système de contrôle, tel que défini dans la déclaration 22, dans lequel une largeur des zones de seuil (76) augmente proportionnellement avec le mouvement d'éloignement d'une position verticale le long du premier axe (Y).
